# EUROPÄISCHE PATENTSCHRIFT

(11) **EP 2 067 958 B1**
(45) Veröffentlichungstag und Bekanntmachung des Hinweises auf die Patenterteilung: **01.02.2012**
(21) Anmeldenummer: 08170451.2
(22) Anmeldetag: 02.12.2008
(51) Int. Cl.: F02B 37/22, F02B 39/00

(54) **Abgasturbolader für eine Brennkraftmaschine und Vorrichtung zum Schalten einer Luftführungsvorrichtung eines Abgasturboladers**
Exhaust gas turbocharger for a combustion engine and device to switch an air guidance device of an exhaust gas turbocharger
Turbosoufflante de gaz d'échappement pour un moteur à combustion interne et dispositif destiné à commuter un dispositif de guidage d'air d'une turbosoufflante de gaz d'échappement

(30) Priorität: 04.12.2007 DE 102007058615
(43) Veröffentlichungstag der Anmeldung: 10.06.2009
(73) Patentinhaber: MANN+HUMMEL GmbH, 71638 Ludwigsburg (DE); Daimler AG, 70327 Stuttgart (DE)
(72) Erfinder: Talmon-Gros, Dietmar, 71717, Beilstein (DE); Huurdeman, Dr. Bernhard, 71691, Freiberg (DE); Franz, Andreas, 71638, Ludwigsburg (DE); Fledersbacher, Peter, 70569, Stuttgart (DE); Sumser, Siegfried, 70327, Stuttgart (DE)

(56) Entgegenhaltungen:
- EP-A- 1 416 123
- EP-A- 1 482 128
- WO-A-2005/100798
- FR-A- 2 878 914
- JP-A- 11 006 500

## Beschreibung

### Technisches Gebiet

Die Erfindung betrifft einen Abgasturbolader für eine Brennkraftmaschine, der im Oberbegriff des Patentanspruchs 1 angegebenen Art sowie eine schaltbare Luftführungsvorrichtung eines Abgasturboladers.

### Stand der Technik

Ein derartiger Abgasturbolader ist bereits aus dem Serienfahrzeugbau bekannt und umfasst üblicherweise einen in einem Ansaugtrakt einer Brennkraftmaschine anordnenbaren Verdichter zum Vorverdichten eines Luftstroms, welcher durch den Ansaugtrakt auf den Verdichter zu leitenden ist. Der Verdichter übernimmt dabei das Ansaugen des Luftstroms und fördert den vorverdichteten Luftstrom weiter zur Brennkraftmaschine. Die Antriebsleistung des Verdichters wird durch eine in einem Abgastrakt der Brennkraftmaschine angeordnete und über eine Welle drehfest mit dem Verdichter gekoppelte Abgasturbine geliefert, welche durch die Abgase der Brennkraftmaschine angetrieben wird. Der vom Verdichter vorverdichtete und aufgeheizte Luftstrom wird vor dem Eintritt in die Zylinder der Brennkraftmaschine mit Hilfe eines Ladeluftkühlers gekühlt, um eine verbesserte Zylinderfüllung zu erzielen.

Als nachteilig an den bekannten Abgasturboladern ist dabei jedoch der Umstand anzusehen, dass es aufgrund der Massenträgheit des Verdichters bei dynamischen Lastwechselvorgängen der Brennkraftmaschine, beispielsweise beim Wechsel vom Teillast in den Vollast-Betriebsmodus, zum sogenannten Turboloch kommt, da der Verdichter erst wieder auf die geforderte Nenndrehzahl beschleunigt werden muss, um den gewünschten Ladedruck bereitstellen zu können.

Die Schrift W02005/100798A1 offenbart einen Wirbelerzeuger zur Erzeugung einer Wirbelströmung vor einem Gasverdichter. In dem Wirbelerzeuger ist eine Klappe in der Strömung angeordnet, die um ihre Mittelachse senkrecht zur Hauptströmung schwenkt und in der Offenstellung beidseitig vom Gasstrom umströmt wird.

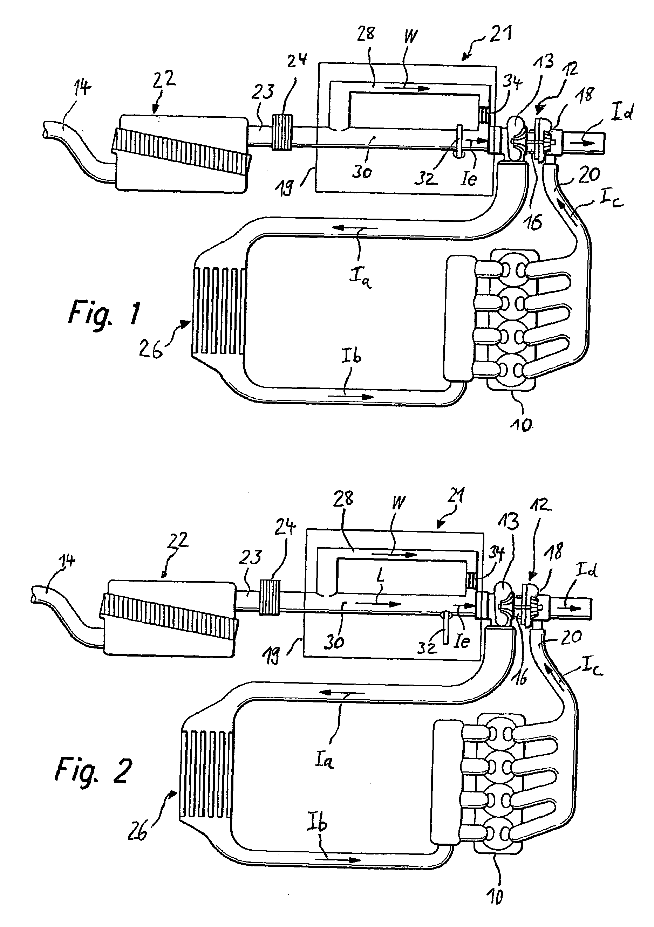

In der EP1482128A1 wird eine aufgeladene Brennkraftmaschine beschrieben mit einem Verdichter, dem mit einer ersten und einer zweiten Luftleitung Luft zugeführt wird. In den Luftleitungen sind Ventile zur Strömungsbeeinflussung vorgesehen. In der Figur 2 sind zwei Klappen einskizziert mit einer Schwenkachse quer zur Strömungsrichtung in der jeweiligen Luftleitung.

### Offenbarung der Erfindung

Aufgabe der vorliegenden Erfindung ist es, einen Abgasturbolader sowie eine schaltbare Luftführungsvorrichtung für einen Abgasturbolader zu schaffen, welche ein verbessertes Ansprechverhalten einer Brennkraftmaschine ermöglichen.

Die Aufgabe wird erfindungsgemäß durch eine schaltbare Luftführungsvorrichtung für einen Abgasturbolader für eine Brennkraftmaschine mit den Merkmalen des Patentanspruchs 1 gelöst.

Damit der Verdichter beim Bewegen der Schaltklappe nicht durch Druckimpulse geschädigt wird, hat es sich erfindungsgemäβ gezeigt, dass die Schaltklappe radial gegenüber dem Leistungskanal verschwenkbar ist und die-Klappe sehr nah am Verdichterrad angeordnet ist, um ein möglichst kleines Volumen zwischen der geschossenen Klappe und dem Verdichterrad zu erreichen. Vorteilhafte Ausgestaltungen mit zweckmäßigen und nicht-trivialen Weiterbildungen der Erfindung sind in den jeweiligen Unteransprüchen angegeben.

Erfindungsgemäß wird ein verbessertes Ansprechverhalten einer Brennkraftmaschine dadurch ermöglicht, dass dem Verdichter eine schaltbare Luftführungsvorrichtung in Modulbauweise aus mehreren Komponenten vorgeordnet ist, mittels welcher der Verdichter auf zumindest zwei unterschiedliche Weisen mit dem Luftstrom anzuströmen ist. Mit anderen Worten ist vorgesehen, dass die Anströmbedingungen des Verdichters mit Hilfe der Luftführungsvorrichtung variiert werden können, wodurch es im Gegensatz zum Stand der Technik möglich ist, den Luftstrom beispielsweise im Teillast- und im Vollast-Betriebsmodus jeweils unterschiedlich auf den Verdichter zu leiten. Die Möglichkeit einer variablen Anströmung des Verdichters erlaubt daher eine verbesserte Berücksichtigung des jeweiligen Betriebsmodus der Brennkraftmaschine, woraus ein entsprechend verbessertes Ansprechverhalten derselben resultiert. Durch eine anpassbare Anströmungen des Verdichters kann dessen Drehzahl beispielsweise im Teillast Betriebsmodus angehoben werden, so dass sich beim dynamischen Lastwechsel vom Teillast- in den Vollast-Betriebsmodus die zum Beschleunigen des Verdichters auf die geforderte Nenndrehzahl benötigte Zeitspanne entsprechend verkürzt bzw. die geforderte Nenndrehzahl bereits anliegt.

In einer vorteilhaften Ausgestaltung der Erfindung ist vorgesehen, dass die Luftführungsvorrichtung zwischen einer Wirbelstellung, in welcher dem Luftstrom vor dem Anströmen des Verdichters eine Drehimpulskomponente zu verleihen ist, und einer Leistungsstellung, in welcher der Verdichter mit einem zumindest im Wesentlichen drehimpulsfreien Luftstrom anzuströmen ist, zu schalten ist. In der Wirbelstellung kann somit die Drehzahl des Verdichters beispielsweise unter Teillast durch Veränderung der Anströmbedingungen erhöht werden, ohne dass externe Energie - beispielsweise mittels eines elektrischen Unterstützers - eingebracht werden müsste. Ist die Luftführungsvorrichtung in Wirbelstellung geschaltet, nimmt der Verdichter somit weniger Leistung auf, wodurch ein größerer Teil der von der Abgasturbine eingespeisten Leistung zur Überwindung von Lagerreibungskräften genutzt und die Drehzahl des Verdichters entsprechend angehoben werden kann. Im Idealfall entspricht die auf diese Weise erreichbare Drehzahl der geforderten Nenndrehzahl, so dass ein zumindest annähernd "drehzahlstationärer" Betrieb des Verdichters erreichbar ist. Umgekehrt kann ein Schalten der Luftführungsvorrichtung in die Leistungsstellung dazu genutzt werden, den Verdichter mit einem zumindest im Wesentlichen drehimpulsfreien Luftstrom anzuströmen, um etwa im Vollast Betriebsmodus der Brennkraftmaschine keine Leistungsminderung zu erhalten.

Dabei hat es sich in weiterer Ausgestaltung als vorteilhaft gezeigt, dass bei in die Wirbelstellung geschalteter Luftführungsvorrichtung die dem Luftstrom zu verleihende Drehimpulskomponente parallel zu einem Drehimpuls des Verdichters angeordnet ist. Dies ermöglicht eine besonders vorteilhafte Anströmung des Verdichters, da der Luftstrom auf diese Weise gleichsinnig mit einer Drehrichtung des Verdichters verwirbelt ist und aufgrund der starken Mitdrallströmung ein entsprechend hohes Drehmoment auf den Verdichter übertragen kann. Dies ermöglicht eine erhebliche Steigerung der Drehzahl des Verdichters, welcher somit beispielsweise im Teillast-Betriebsmodus als sogenannte Kaltluftturbine bzw. Impulsturbine arbeiten kann.

In einer weiteren vorteilhaften Ausgestaltung der Erfindung ist vorgesehen, dass die Luftführungsvorrichtung zumindest einen Wirbelkanal und einen Leistungskanal umfasst, wobei der Luftstrom in der Wirbelstellung zumindest überwiegend durch den Wirbelkanal und in der Leistungsstellung zumindest überwiegend durch den Leistungskanal zu leiten ist. Dies stellt eine konstruktiv einfache und kostengünstige Möglichkeit dar, den Verdichter auf zumindest zwei unterschiedliche Weisen mit dem Luftstrom anzuströmen.

Ein weiterer Vorteil ergibt sich daraus, dass die Luftführungsvorrichtung eine Schaltklappe umfasst, mittels welcher ein Anteil des durch den Wirbelkanal und/oder durch den Leistungskanal zu leitenden Luftstroms einzustellen ist. Eine derartige Schaltklappe erlaubt ein schnelles Schalten der Luftführungsvorrichtung und kann einfach und bauraumsparend in die Luftführungsvorrichtung integriert werden. Der mittels der Schaltklappe einstellbare Anteil des Luftstroms ist dabei vorzugsweise ein Massenanteil. Dabei kann es auch vorgesehen sein, dass mittels der Schaltklappe der gesamte Luftstrom entweder durch den Wirbelkanal oder durch den Leistungskanal zu leiten ist. Die Schaltklappe sollte dabei vorteilhafterweise Schaltzeiten unter 100 ms aufweisen, um ein schnelles Ansprechen auf Lastwechselvorgänge der Brennkraftmaschine sicherzustellen.

Ein weiterer Vorteil der Schaltklappe besteht darin, dass der angesaugte Luftstrom gezielt angedrosselt werden kann, wodurch eine Steuerung von Abgasrückführungsraten der Brennkraftmaschine ermöglicht sind. Des Weiteren kann durch gezielte Androsselung mit Hilfe der Schaltklappe der Wirkungsgrad der Brennkraftmaschine verschlechtert werden, wodurch die Temperatur der Abgase steigt. Dieser Effekt kann dann beispielsweise zur Verbesserung der Emissionswerte beim Kaltstart oder bei als Dieselmotoren ausgebildeten Brennkraftmaschinen zur Regeneration eines Dieselpartikelfilters bzw. eines NO-Speicherkatalysators verwendet werden.

Die Schaltklappe sollte ein geringes Gewicht haben und kann als dünne Scheibe ausgeführt sein, die seitlich aus einem Hohlraum in etwa senkrecht zum Leistungskanal in die Strömung einschwenkt. Vorteilhaft ist eine Lagerung der Klappe in dem dem Verdichter abgewandten Gehäuseteil der Luftführungsvorrichtung, da niedrigere Temperaturen zu erwarten sind. Die Klappenlagerung kann aber auch in einem andern Gehäuseteil integriert sein. Zur Führung der Schaltklappe während der Betätigung und zur Reduzierung der Reibkräfte werden durch das Gehäuse Gleitschienen gebildet, an denen-sich die Klappe entlang bewegen kann.

Um eine definierte Position der Schaltklappe in den Endlagen zu gewährleisten und akustische Beeinträchtigungen während der Ruhestellung in diesen Endlagen zu erreichen, sind Endanschläge für den Schaltmechanismus im Gehäuse der Luftführungsvorrichtung vorgesehen.

In einer vorteilhaften Ausgestaltung ist ein Endanschlag für die Klappe in der Stellung "Leistungskanal offen" auf der Gehäuseinnenseite angeordnet, da in dieser Position die Klappe mit einem Teil ihrer Seitenfläche gegen den Anschlag gedrückt werden kann und Schaltmechanismus durch den Aktuator unter Spannung gehalten wird und somit eine Geräuschbildung durch Klappern von Schaltmechanismus oder Klappe verhindert werden kann. Ein zweiter Endanschlag ist für den Mitnehmer außerhalb des Gehäuses für die Schaltstellung "Leistungskanal geschlossen" vorgesehen. In dieser Endlage legt sich die Klappe am Dichtring an, da der Verdichter einen Unterdruck erzeugt, der die Klappe auf die Dichtung zieht und der Hebel zur Betätigung der Klappe ist am Endanschlag verspannt.

Um eine leichte Beweglichkeit der Klappe beim Schalten zu ermöglichen und eine dichtende Anlage an die Dichtscheibe für den geschlossenen Zustand zu erreichen, ist die Schaltklappe in Richtung der Schwenkachse verschiebbar gelagert oder als Bauteil so nachgiebig, dass eine Anlage an der Dichtscheibe und ein Gleiten minimal versetzt in Richtung der Schwenkachse in die Stellung "Leistungskanal" möglich ist.

Eine solche Verschiebung der Klappenlage in Richtung der Schwenkachse kann durch ein axiales Lagerspiel oder eine spezielle Gestaltung der Schaltklappe erreicht werden, wenn beispielsweise die Klappenfläche über einen federnden Steg mit der Lagerstelle verbunden ist. Die Schaltklappe kann in verschiedener Weise betätigt werden. Für die Schaltung der Klappe kommen pneumatische Aktuatoren wie Unter- oder Überdruckdosen oder elektrische Antriebe in Betracht. Es ist auch möglich, die Schaltklappe magnetisch zu betätigen. Der Aktuator ist zweckmäßiger Weise an einem der Gehäuseteile der Luftführungsvorrichtung befestigt. Vorteilhaft ist die Montage an dem Gehäuseteil, das die Lagerung der Schaltklappe bildet, um unnötige Toleranzen zu vermeiden. In der Schaltstellung "Leistungskanal geschlossen" wird durch den Staudruck der Luft in der Luftführungsvorrichtung die Klappe in Richtung Verdichter gegen die den Öffnungsquerschnitt des Leistungskanals umgebene Dichtscheibe gedrückt und so die Dichtwirkung verstärkt. Um die Stellkräfte für den Aktuator möglichst klein zu halten, besteht die Dichtscheibe vorzugsweise aus einem gleitoptimierten Material oder weist zumindest eine Oberfläche mit geringer Reibung auf. Ein möglicher Werkstoff zur tribologischen Optimierung ist beispielsweise Teflon. Ein Strömungsleitgitter zur Einleitung der Luft aus dem Wirbelkanal in den Leistungskanal kann zwischen der Klappe und dem Verdichter angeordnet sein. In einer vorteilhaften Ausgestaltung der Luftführungsvorrichtung ist das Strömungsleitgitter in das Unterteil oder das Verdichtergehäuse eingelegt und mit einem zusätzlichen Distanzring zum korrespondierenden Gehäuseteil fest gehalten. In einer anderen Ausführungsform der Luftführungsvorrichtung kann diese bei günstiger Ausgestaltung des Wirbelkanals ohne Strömungsleitgitter ausgeführt sein.

In einer weiteren vorteilhaften Ausgestaltung der Erfindung ist vorgesehen, dass die Luttführungsvorrichtung ein Luftleitelement, insbesondere ein Leitgitter, umfasst, mittels welchem eine Strömungsrichtung des Luftstroms umzulenken und/oder dem Luftstrom vor dem Anströmen des Verdichters die Drehimpulskomponente zu verleihen ist. Mit Hilfe eines derartigen Luftleitelements kann die Strömungsrichtung des Luftstroms besonders einfach und variabel umgelenkt und beispielsweise mit der Drehimpulskomponente versehen werden. Je nach Auslegung kann das Luftleitelement zu diesem Zweck eine oder mehrere Leitschaufeln mit variierbaren Schaufelprofilierungen bzw. Schaufelwinkelen oder unterschiedliche Durchströmungsquerschnitte aufweisen und ist somit optimal an die jeweiligen konstruktiven und strömungstechnischen Gegebenheiten anpassbar. Dabei kann die Luftführungsvorrichtung besonders bauraumsparend ausgebildet werden, indem der Wirbelkanal an einem Außenumfang des Leistungskanals angeordnet ist.

In weiterer Ausgestaltung hat es sich zudem als vorteilhaft gezeigt, dass der Wirbelkanal zumindest abschnittsweise spiralförmig ausgebildet ist. Dies stellt eine konstruktiv einfache Möglichkeit dar, den Wirbelkanal als Strömungsvolute ausbilden und zur gezielten Umlenkung des Luftstroms verwenden zu können.

In einer weiteren vorteilhaften Ausgestaltung der Erfindung ist vorgesehen, dass die Luftführungsvorrichtung mechanisch, insbesondere mittels einer Über- und/oder Unterdruckdose, und/oder elektronisch zu schalten ist. Dies erlaubt eine besonders variable Ausgestaltung des Abgasturboladers und eine einfache Anpassbarkeit an unterschiedliche konstruktive Gegebenheiten, Ausstattungslinien oder dergleichen.

Weitere Vorteile ergeben sich dadurch, dass der Luftführungsvorrichtung ein Gehäuse zugeordnet ist, über welches die Luftführungsvorrichtung mit dem Abgasturbolader und/oder dem Ansaugtrakt koppelbar ist. Obwohl die Luftführungsvorrichtung grundsätzlich auch in ein ohnehin vorhandenes Verdichtergehäuse des Abgasturboladers integriert sein kann, bietet ein derartiges Gehäuse den Vorteil, dass die Luftführungsvorrichtung als selbständiges Bauteil ausgebildet sein und somit einfach mit bereits vorhandenen Abgasturboladern gekoppelt bzw. als Nachrüstlösung angeboten werden kann. Weiterhin wird aufgrund der variablen Ausgestaltungsmöglichkeiten der Luftführungsvorrichtung eine Senkung der Lagerhaltungskosten sowie der Wartungs- und Reparaturkosten erreicht. Die einzelnen Bauteile können auf verschiedene Weisen verbunden sein. Eine Ausführungsform ist die Montage mit Schrauben. Es sind aber auch andere Verfahren, wie beispielsweise Schweißen, Clipsen oder Kleben möglich. Zur Herstellung der Gehäusebauteile der Luftführungsvorrichtung 21 sind verschiedene Materialien denkbar. Üblicherweise werden die Gehäuse von Verdichtern aus einem Metallwerkstoff gefertigt. Die Luftführungsvorrichtung kann aber auch aus temperaturbeständigem Kunststoff gefertigt sein, beispielsweise Polyamid oder anderen technischen Kunststoffen.

### Kurze Beschreibung der Zeichnungen

Weitere Vorteile, Merkmale und Einzelheiten der Erfindung ergeben sich aus der nachfolgenden Beschreibung eines Ausführungsbeispiels sowie anhand der Zeichnungen, in welchen gleiche oder funktionsgleiche Elemente mit identischen Bezugszeichen versehen sind. Es zeigen:

Figur 1 eine schematische Prinzipdarstellung einer Brennkraftmaschine mit einem Abgasturbolader, der in einem Ansaugtrakt eine Luftführungsvorrichtung gemäß einem Ausführungsbeispiel vorgeordnet ist, wobei die Luftführungsvorrichtung in einer Wirbelstellung geschaltet ist;

Figur 2 eine schematische Prinzipdarstellung der in Figur 1 gezeigten Brennkraftmaschine, wobei die Luftführungsvorrichtung in eine Leistungsstellung geschaltet ist;

Figur 3 das Gehäuse eines Abgasturboladers mit montierter Luftführungsvorrichtung;

Figur 4 eine schaltbare Luftführungsvorrichtung mit Aktuator und Schubstange in einer perspektivischen Seitenansicht;

Figur 5 eine schaltbare Luftführungsvorrichtung ohne Aktuator in einer perspektivischen Seitenansicht;

Figur 6 eine perspektivische Explosionsdarstellung der Luftführungsvorrichtung mit Einzelteilen;

Figur 7 eine Schnittdarstellung entlang der Längsachse durch die Luftführungsvorrichtung;

Figur 8 eine perspektivische Darstellung des Gehäuseoberteils in der Schaltstellung "Leistungskanal offen" und

Figur 9 eine perspektivische Darstellung des Gehäuseoberteils in der Schaltstellung "Leistungskanal geschlossen".

### Ausführungsform(en) der Erfindung

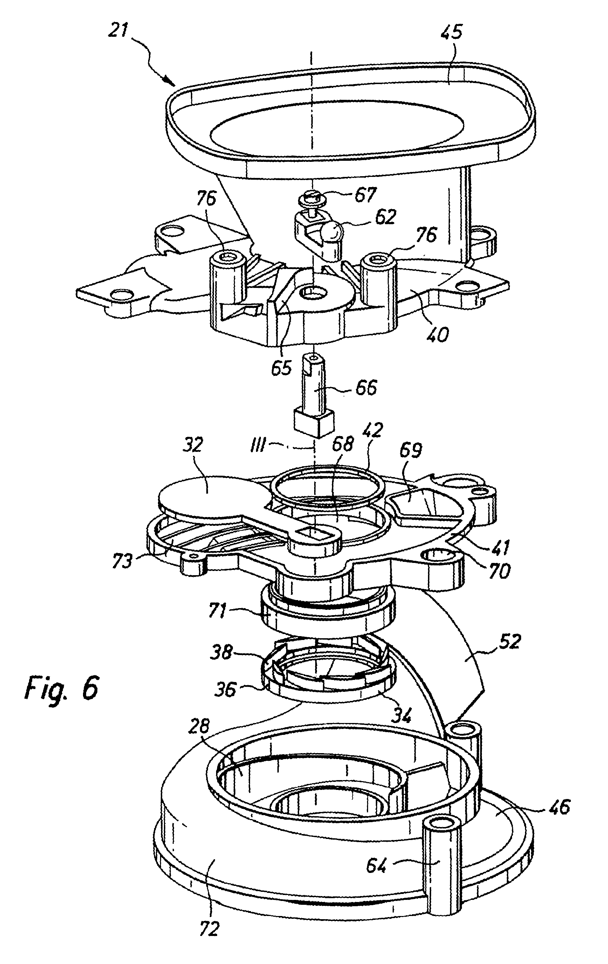

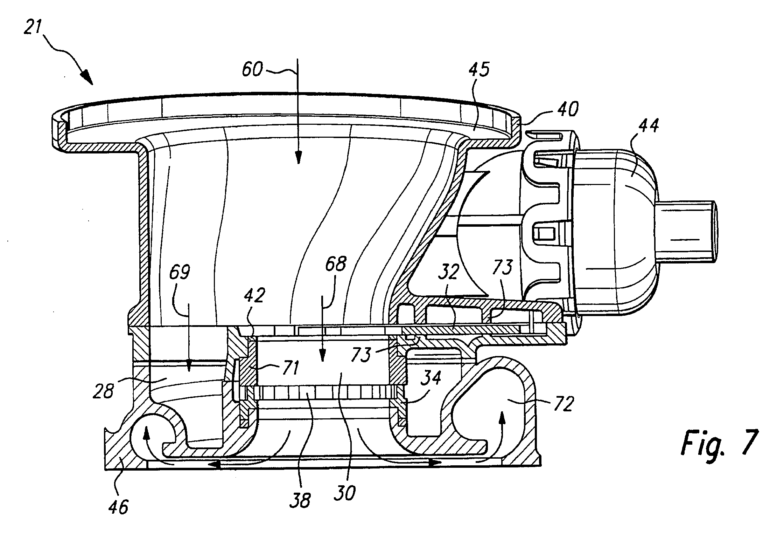

Fig. 1 zeigt eine schematische Prinzipdarstellung einer im vorliegenden Ausführungsbeispiel als vierzylindriger Dieselmotor ausgebildeten Brennkraftmaschine 10 mit einem Abgasturbolader 12, welcher einen Verdichter 13 in einem Ansaugtrakt 14 sowie eine über eine Welle 16 drehfest mit dem Verdichter 13 gekoppelte Abgasturbine 18 in einem Abgastrakt 20 umfasst. Alternativ kann auch vorgesehen sein, dass die Brennkraftmaschine 10 als Ottomotor mit geschichteter Direkteinspritzung ausgebildet ist. Die durch den Abgastrakt 20 geführten Abgase der Brennkraftmaschine 10 treiben über die Abgasturbine 18 den Verdichter 13 an, welcher dann seinerseits den durch den Ansaugtrakt 14 geleiteten Luftstrom vorverdichtet. Dem Verdichter 13 des Abgasturboladers 12 ist dabei im Ansaugtrakt 14 eine in einem Gehäuse 19 aufgenommene Luftführungsvorrichtung 21 vorgelagert, mittels welcher der Verdichter 13 auf zumindest zwei unterschiedliche Weisen mit dem Luftstrom anzuströmen ist und deren Funktionsweise im Folgenden näher erläutert werden wird. Nach dem Vorverdichten mittels des Verdichters 13 wird der Luftstrom schließlich durch einen an sich bekannten Ladeluftkühler 26 geleitet, mittels welchem die durch den Verdichter 13 aufgeheizte, vorverdichtete Luft vor dem Eintritt in die Brennkraftmaschine 10 abgekühlt wird. Die Pfeile Ia und Ib kennzeichnen dabei die Strömungsrichtung des Luftstroms im Ansaugtrakt 14, die Pfeile Ic und Id die Strömungsrichtung der durch die Verbrennung innerhalb der Brennkraftmaschine 10 entstehenden Abgase im Abgastrakt 20. Der in den Ansaugtrakt 14 eingesaugte Luftstrom wird zunächst mittels eines Luftfilters 22 gereinigt. Anschließend wird über einen dem Luftfilter 22 nachgeordneten Luftmassenmesser 24, welcher vorliegend als Heißfilmluftmassenmesser ausgebildet ist, die Masse des Luftstroms zur Steuerung des späteren Verbrennungsprozesses ermittelt. Der Luftmassenmesser 24 kann zudem gegebenenfalls wichtige Stellgrößen für ein Abgasrückführungssystem (nicht abgebildet) liefern. Die dem Verdichter 13 des Abgasturboladers 12 vorgelagerte Luftführungsvorrichtung 21 umfasst einen Wirbelkanal 28, einen Leistungskanal 30 sowie eine verschwenkbare Schaltklappe 32, mittels welcher der Luftstrom zwischen dem Wirbelkanal 28 und dem Leistungskanal 30 aufteilbar ist. Die Schaltklappe 32 ist dabei möglichst nahe am Verdichter 13 angeordnet, um das Volumen zwischen dem Verdichter 13 und der Schaltklappe 32 und damit das Volumen, innerhalb welchem sich eine Drehimpulskomponente des Luftstroms unerwünscht abschwächen könnte, möglichst gering zu halten. Die Schaltklappe 32 verschließt in der gezeigten Wirbelstellung der Luftführungsvorrichtung 21 den Leistungskanal 30 vollständig, so dass der Luftstrom ausschließlich gemäß Pfeil W durch den Wirbelkanal 28 geleitet wird. Alternativ kann jedoch auch vorgesehen sein, dass ein Teil des Luftstroms zusätzlich gemäß Pfeil L durch den Leistungskanal 30 geleitet wird. Durch den Wirbelkanal 28 wird der Luftstrom gleichmäßig auf ein Luftleitelement 34 verteilt, welches am Ende des Wirbelkanals 28 angeordnet ist und aus mehreren, auf einem Kreisring 36 aufgebrachten Leitschaufeln 38 besteht (s. Fig. 6 und 7). Durch die Leitschaufeln 38 wird dem Luftstrom eine Drehimpulskomponente verliehen, welche parallel zu einem Drehimpuls des Verdichters 13 angeordnet ist. Mit anderen Worten wird ein drallbehafteter Luftstrom erzeugt, mittels welchem der Verdichter 13 mit einem starken Mitdrall anzuströmen ist, so dass eine vortreibende Impulskraft auf den Verdichter 13 ausgeübt und die Drehzahl des Verdichters 13 entsprechend erhöht wird. Dadurch muss der Verdichter 13 beim Lastwechsel in den Vollast-Betriebsmodus der Brennkraftmaschine 10 (s. Fig. 2) nicht erst wieder auf die geforderte Nenndrehzahl beschleunigt werden, so dass ein schnelles Ansprechverhalten der Brennkraftmaschine 10 gewährleistet ist. Eine besonders große Drehzahlsteigerung kann dadurch erzielt werden, dass dem Verdichter 13 mittels des Luftstroms ein derart starker Mitdrall aufgeprägt wird, dass der Verdichter 13 im Teillast-Betriebsmodus der Brennkraftmaschine 10 als sogenannte Kaltluftturbine bzw. Impulsturbine arbeitet.

Fig. 2 zeigt eine schematische Prinzipdarstellung der Brennkraftmaschine 10 gemäß Fig. 1, wobei die Luftführungsvorrichtung 21 in eine Leistungsstellung geschaltet ist, in welcher die Schaltklappe 32 sowohl den Wirbelkanal 28 als auch den Leistungskanal 30 vollständig freigibt. Der Schaltvorgang zwischen der Wirbel- und der Leistungsstellung erfolgt dabei beim Lastwechsel der Brennkraftmaschine 10 zwischen dem Teillast- und dem Vollast-Betriebsmodus. Da der Verdichter 13 im Vollast-Betriebsmodus zur Vermeidung einer Leistungsminderung der Brennkraftmaschine 10 mit möglichst drallfreier Luftströmung angeströmt werden muss, wird zumindest der überwiegende Anteil der Luftströmung in der Leistungsstellung gemäß Pfeil L durch den Leistungskanal 30 geleitet und strömt den Verdichter 13 drallfrei bzw. makroskopisch betrachtet ohne eine parallel zu einem Drehimpuls des Verdichter 13 angeordnete Drehimpulskomponente an.

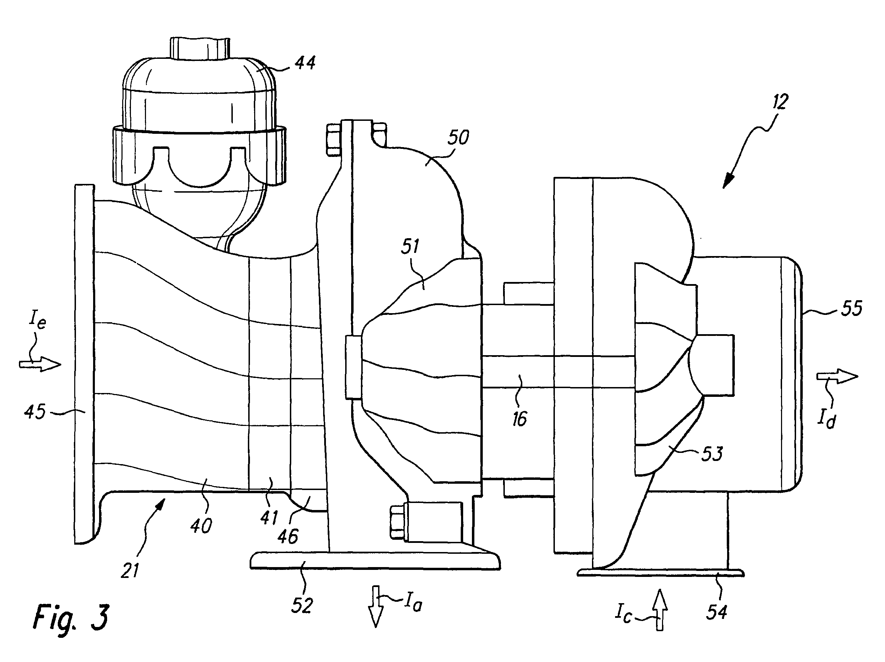

Fig. 3 zeigt in einer schematischen Darstellung das Gehäuse eines Abgasturboladers 12 mit einer daran befestigten schaltbaren Luftführungsvorrichtung 21. Die durch den Abgastrakt 20 geführten Abgase der Brennkraftmaschine 10 treiben über die Abgasturbine 18 den Verdichter 13 an, welcher dann den durch den Ansaugtrakt 14 geleiteten Luftstrom vorverdichtet. Dem Verdichter 13 des Abgasturboladers 12 ist dabei im Ansaugtrakt 14 eine in einem Gehäuse 19 aufgenommene Luftführungsvorrichtung 21 vorgelagert, mittels welcher der Verdichter 13 auf zumindest zwei unterschiedliche Weisen mit dem Luftstrom angeströmt werden kann und deren Aufbau im Folgenden näher erläutert wird. Dargestellt sind die Einströmrichtung in die Turbinenseite Ic und die turbinenseitige Ausströmrichtung Id sowie Einströmung le in die Luftführungsvorrichtung 21 und Ausströmung la aus dem Verdichter. Dieser besteht auf der Verdichterseite aus dem Verdichtergehäuse 50 und der mit dem Verdichtergehäuse 50 verbundenen Luftführungsvorrichtung 21 mit dem Aktuator 44 zur Betätigung einer Schaltvorrichtung (in Fig. 1 nicht dargestellt). Abweichend von der dargestellten Ausführung des Aktuators 44 als Unterdruckdose kommen auch Überdruckdosen oder elektrische Antriebe in Betracht. Es ist auch möglich, die schwenkbare Schaltklappe 32 mit einem Elektromotor oder magnetisch zu betätigen. Gezeigt ist eine Luftführungsvorrichtung 21, die zusammengesetzt ist aus dem Oberteil 40, dem Mittelteil 41 und dem Unterteil 46. Es ist jedoch auch eine andere Aufteilung der Luftführungsvorrichtung 21 in einzelne Gehäuseteile möglich sowie eine von dem Gehäuse des Abgasturboladers 12 getrennte Ausführung. Die im Luftfilter 22 gefilterte Reinluft strömt durch die Reinluftleitung 23 in die Luftführungsvorrichtung 21 ein. Die Luftführungsvorrichtung 21 ist am Verbindungsflansch 45 mit der Reinluftleitung 23 verbunden. Diese Verbindung kann mit dem Fachmann geläufigen Kopplungsmitteln wie Bajonettverschlüssen, Schlauchschellen, Henn-Kupplung oder dergleichen erfolgen. Die Luftführungsvorrichtung 21 ist fest mit dem Verdichtergehäuse 50 verbunden. In der dargestellten Ausführungsform bildet ein Teil der Luftführungsvorrichtung 21 einen Teil des Verdichtergehäuses 50. Die über das Verdichterrad 51 verdichtete Luft strömt aus dem Verdichteraustritt 52 über einen Ladeluftkühler 26 in den Verbrennungsraum der Brennkraftmaschine 10. Das Verdichterrad 51 wird über eine Welle 16 vom Turbinenrad 53 auf der Abgasseite des Abgasturboladers 12 angetrieben. Auf der Turbinenseite mit der Turbineneintrittsöffnung 54 strömt das Abgas am Turbinenrad 53 vorbei zum Turbinenauslass 55.

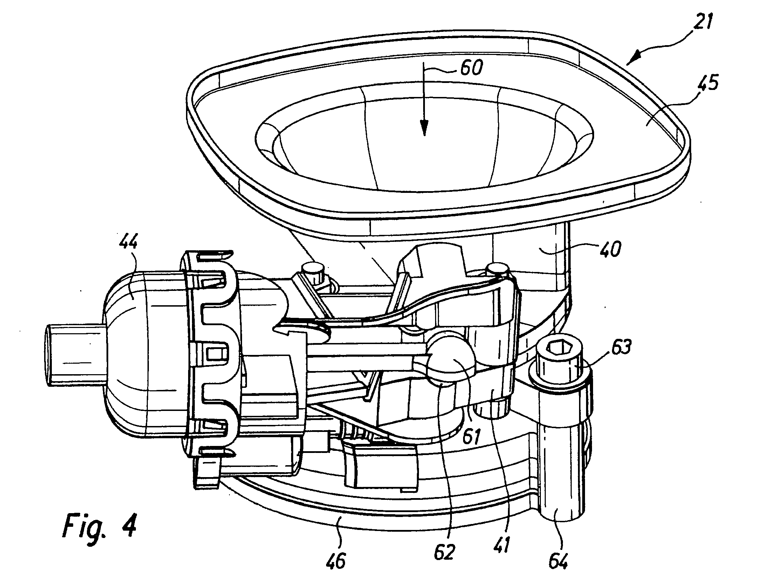

Fig. 4 zeigt eine perspektivische Ansicht eines mehrteiligen Gehäuses, vorliegend aus Kunststoff gefertigt, einer schaltbaren Luftführungsvorrichtung 21, bestehend aus einem Oberteil 40 und einem Unterteil 46 mit einem dazwischen angeordneten Mittelteil 41. Die vom Abgasturbolader 12 angesaugte Luft strömt durch den Lufteintritt 68 am reinluftseitigen Verbindungsflansch 45 in die Luftführungsvorrichtung 21 ein. Ein am Oberteil 40 der Luftführungsvorrichtung angebrachter Aktuator 44 ist über eine Schubstange 61 und einen Hebel 62 mit der Schaltvorrichtung 32 verbunden. Dargestellt ist ein Unterdruckaktuator 44, der über ein Schaltventil (nicht dargestellt) angesteuert wird. Anstelle der gezeigten Unterdruckdose können auch Überdruckdosen oder elektrische Stellmotoren vorgesehen sein, die über das Motorsteuergerät (nicht dargestellt) der Brennkraftmaschine 10 angesteuert werden. Die Gehäusebauteile sind über Schraubverbindungen 63 gefügt. Selbstverständlich sind auch andere dem Fachmann geläufige Verbindungsmöglichkeiten wie Kleben oder Schweißen möglich. Dabei wird das Mittelteil 41 zwischen Oberteil 40 und Unterteil 46 befestigt.

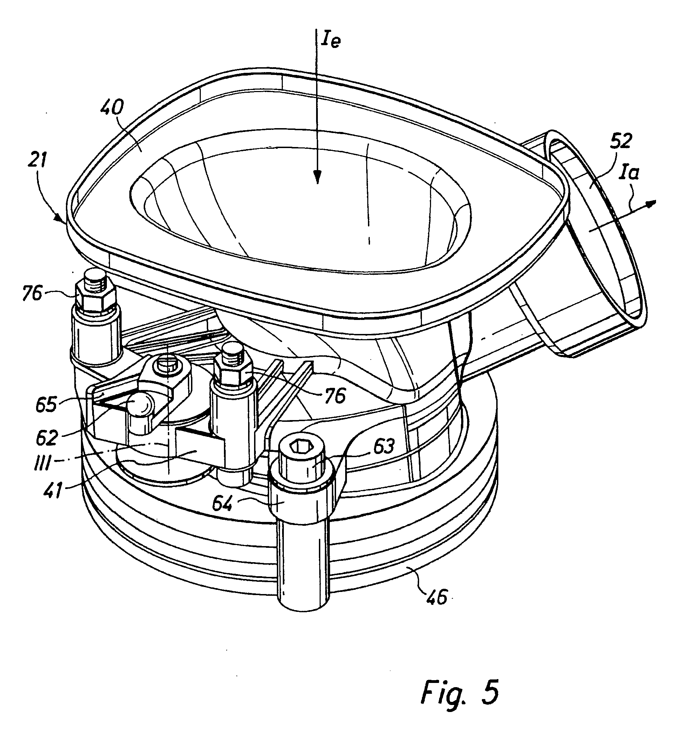

Fig. 5 zeigt die perspektivische Ansicht einer schaltbaren Luftführungsvorrichtung 21 ohne die Darstellung des Aktuators 44. Das Oberteil 40 ist mit dem Mittelteil 41 und dem Unterteil 46 fest verbunden über eine Anzahl von Befestigungspunkte 64. Die Reinluft tritt vom Luftfilter 22 kommend über den Lufteintritt 60 am zur Reinluftleitung 23 korrespondierenden Verbindungsflansch 45 in die Luftführungsvorrichtung 21 ein und nach der Verdichtung der Luft im Verdichter 13 strömt diese am Verdichteraustritt 52 aus. Der Flansch am Verdichteraustritt 52 wird durch das Unterteil 46 gebildet, das mit dem Verdichtergehäuse 50 des Abgasturboladers 12 verbunden ist. Zur Abdichtung der Luftführungsvorrichtung 21 zum Abgasturbolader 12 und der Reinluftleitung 23 sowie der Gehäuseteile (40, 46, 41) der Luftführungsvorrichtung 21 untereinander ist ein Dichtring (nicht gezeigt) oder ein anderes geeignetes Dichtmittel, wie beispielsweise eine Flüssigdichtung vorgesehen. Zu erkennen sind die Befestigungspunkte 76 am Oberteil 40 für den Aktuator 44 mit dem Schalthebel 62 für die Übertragung der Kraft vom Aktuator 44 auf die Schaltvorrichtung. Der gezeigte Schalthebel 62 ist mit einem Kugelkopf versehen, um eine optimale Beweglichkeit der Schubstange 61 auf dem Schalthebel 62 zu ermöglichen. Eine gehäusefeste Anschlagfläche 65 begrenzt den Drehwinkel des Schalthebels 62 und damit der Schwenkklappe 32 in die Richtung "Leistungskanal offen".

Fig. 6 zeigt eine perspektivische Explosionsdarstellung der in Fig. 4 dargestellten Luftführungsvorrichtung 21. Das Oberteil 40 bildet den Verbindungsflansch 45 zur Reinluftleitung 23 und die Befestigungspunkte 76 zum Befestigen eines Aktuators 44. Die Welle 66 ist zur Übertragung der Kräfte des Aktuators 44 auf die Schaltvorrichtung 32 im Oberteil 40 gelagert. Diese Welle 66 verbindet die Schaltvorrichtung 32 mit dem Schalthebel 62. Dieser kann durch eine Schraube 67 oder ein anderes Verfahren mit der Welle verbunden sein. Zur Drehmomentübertragung über die Welle 66 ist eine Abflachung der Enden der Welle 66 zweckmäßig. Am Oberteil 40 ist eine Schwenkklappe 32 angeordnet, die den Leistungskanaleintritt 68 durch eine Rotation um die Schwenkachse III schließen und öffnen kann, während der Wirbelkanaleintritt 69 ständig geöffnet bleibt. Zwischen der Schwenkklappe 32 und dem Gehäuseteil 41 ist ein tribologisch optimierter Gleitring 42 angeordnet, der eine leichte Bewegung der Schwenkklappe 32 über den Rand des Leistungskanaleintritts 68 ermöglicht. In der dargestellten Ausführungsform sind am Mittelteil 41 am Umfang Durchgangsbohrungen 70 angeordnet, die ein Verschrauben des Mittelteils 41 zwischen Oberteil 40 und Unterteil 46 ermöglichen. An das Mittelteil 41 grenzt das Unterteil 46, das einen Teil des Verdichtergehäuses 50 bildet, dazwischen ist ein Distanzring 71 und ein Strömungsleitgitter 34 eingelegt. Das Strömungsleitgitter 34 besteht aus einem Kreisring 36 mit aufgesetzten Leitschaufeln 38. Durch dieses Strömungsleitgitter 34 strömt die Luft aus dem Wirbelkanal 28 tangential in den Leistungskanal 30 ein, bevor die Luft auf das Verdichterrad 51 trifft. Das Unterteil 46 bildet neben dem Mittelteil 41 überwiegend den Wirbelkanal 28 und teilweise die Verdichtervolute 72 sowie die Befestigungsvorrichtung 64 für Mittelteil 41 und Oberteil 40 aus. Das Unterteil 46 ist mit dem Verdichtergehäuse 50 fest verbunden.

Fig. 7 ist eine Schnittdarstellung der Luftführungsvorrichtung 21 nach Figur 2 entlang der Längsachse des Leistungskanals 30. Die gefilterte Reinluft strömt am Lufteintritt 60 in das trichterförmig gestaltete Oberteil 40, das über den Verbindungsflansch 45 mit der Reinluftleitung 23 (nicht dargestellt) verbunden ist, in die Luftführungsvorrichtung 21 ein. Am Oberteil 40 befestigt ist der Aktuator 44, der die Schwenkklappe 32 betätigt. Das Mittelteil 41 bildet den in Hauptströmungsrichtung liegenden Leistungskanal 30 und den um den Leistungskanal 30 spiralförmig herumführenden Wirbelkanal 28. Der Wirbelkanal 28 ist als Strömungsvolute ausgeführt und lässt die Luft quer zur Hauptströmungsrichtung zwischen den Leitschaufeln 38 des Strömungsleitgitters 34 hindurch tangential in den Leistungskanal 30 einströmen. Die Teilung des Luftstroms in zwei Teilströme, in den Wirbelkanal 28 und den Leistungskanal 30, geschieht durch die Gestaltung des Mittelteils 41, das durch die Gehäuseform den Lufteintritt Wirbelkanal 69 vom Lufteintritt Leistungskanal 68 trennt. Zwischen Mittelteil 41 und Oberteil 40 ist die Schwenkklappe 32 beweglich gelagert. In dem Bereich außerhalb des Lufteintritts Leistungskanal 68 wird die Schwenkklappe 32 durch die Gleitbahnen 73 im Oberteil 40 und Mittelteil 41 abgestützt. Der Lufteintritt Leistungskanal 68 kann durch die Schwenkklappe 32 teilweise oder vollständig verschlossen werden. Die Eintrittsöffnung Leistungskanal 68 ist eine Gleitscheibe 42 vorgesetzt, auf der die Schwenkklappe 32 aufliegt. In das Unterteil 46 sind eine Distanzscheibe 71 und das Strömungsleitgitter 34 eingelegt, die zusammen einen Abschnitt des Leistungskanals 30 bilden und über Absätze zwischen Mittelteil 41 und Unterteil 46 gehalten werden. Der Leistungskanal 30 geht im Unterteil 46 in die Volute des Verdichtergehäuses 50 über, die zum Teil vom Unterteil 46 ausgebildet wird.

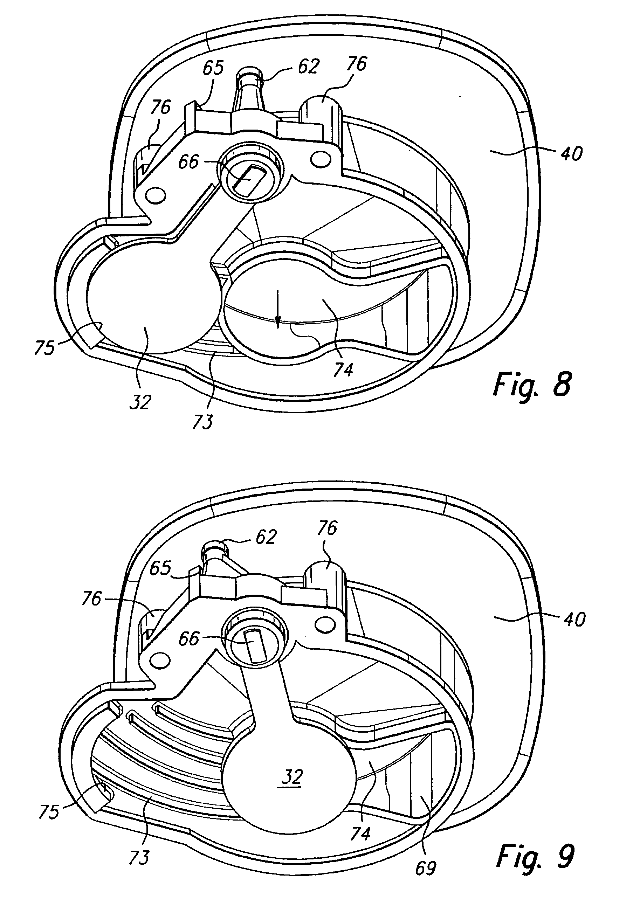

Fig. 8 zeigt eine perspektivische Unteransicht des Oberteils 40 mit der Schwenkklappe 32 in der Schaltstellung "Leistungskanal offen" (Aktuator nicht dargestellt). Die Querschnittsöffnung 74 für die Luft zur Einströmung in den Eintritt Leistungskanal 68 und den Eintritt Wirbelkanal 69 sind vollständig frei geöffnet. Die Schwenkklappe 32 liegt an einer Anschlagsfläche 75 an und stützt sich an den Gleitbahnen 73 ab. Das Drehmoment der Schaltwelle 66 wird über einen Flachkant auf die Schwenkklappe 32 übertragen.

Fig. 9 zeigt eine perspektivische Unteransicht des Oberteils 40 mit der Schwenkklappe 32 in der Schaltstellung "Leistungskanal geschlossen" (Aktuator nicht dargestellt). Der Schalthebel 62 liegt an der Anschlagsfläche 65 an. Die Querschnittsöffnung 74 für die Luft zur Einströmung in den Eintritt Leistungskanal 68 und den Eintritt Wirbelkanal 69 ist teilweise verschlossen, so dass die Schwenkklappe 32 den Lufteintritt Leistungskanal 68 im Mittelteil 41 vollständig verschließt während der Lufteintritt Wirbelkanal 69 frei bleibt.

## Patentansprüche

1. Abgasturbolader für eine Brennkraftmaschine (10), insbesondere für einen Dieselmotor, mit einem in einem Ansaugtrakt (14) der Brennkraftmaschine (10) angeordneten Verdichter (13) zum Vorverdichten eines durch den Ansaugtrakt (14) auf den Verdichter (13) zu leitenden Luftstroms, **dadurch gekennzeichnet, dass** dem Verdichter (13) eine schaltbare Luftführungsvorrichtung (21) vorgeordnet ist, mittels welcher der Verdichter (13) auf zumindest zwei unterschiedliche Weisen mit dem Luftstrom anzuströmen ist, wobei die Luftführungsvorrichtung (21) aus wenigstens zwei, im Wesentlichen aus Kunststoff gefertigten, Komponenten besteht, wobei einer Schaltklappe (32) mit einer zur Hauptströmungsrichtung parallelen Schwenkachse (III) im Wesentlichen rechtwinklig zur Strömung nach Art einer Blende in den Leistungskanal (30) einschwenkt.

2. Abgasturbolader nach Anspruch 1, **dadurch gekennzeichnet, dass** die Komponenten der Luftführungsvorrichtung (21) das Gehäuse der Luftführungsvorrichtung (19) bilden und aus einem Mittelteil (41) und einem Oberteil (40) mit Reinluftflansch (45) bestehen und eine der Komponenten eine Schaltvorrichtung (32) aufweist.

3. Abgasturbolader nach einem der vorherigen Ansprüche, **dadurch gekennzeichnet, dass** eine dem Verdichter (13) vorgeordnete Strömungsvolute eines Wirbelkanals der Luftführungsvorrichtung (21) durch das Gehäuse der Luftführungsvorrichtung (19) oder das Gehäuse des Verdichters (50) gebildet wird oder die Strömungsvolute (28) geteilt ist und zu Teilen durch das Gehäuse der Luftführungsvorrichtung (19) und zu Teilen durch das Verdichtergehäuse (50) gebildet wird.

4. Abgasturbolader nach einem der vorherigen Ansprüche, **dadurch gekennzeichnet, dass** die Luftführungsvorrichtung (21) mit einem Bajonettverschluss oder Schraubverschluss mit dem Verdichtergehäuse (50) lösbar verbunden ist.

5. Abgasturbolader nach einem der vorherigen Ansprüche, **dadurch gekennzeichnet, dass** eine Schaltklappe (32) zwischen zwei Endlagen hin- und herschaltet und/oder Zwischenstellungen einnimmt.

6. Abgasturbolader nach einem der vorherigen Ansprüche, **dadurch gekennzeichnet, dass** Anschläge für die Schaltklappe (32) in den Bereichen der Endposition vorgesehen sind und/oder für ein Schalthebel (62) oder eine Schubstange (61) Endanschläge (65, 75) vorgesehen sind.

7. Abgasturbolader nach einem der vorherigen Ansprüche, **dadurch gekennzeichnet, dass** die Luftführungsvorrichtung (21) zwischen der Schaltklappe (32) und einem in Richtung Verdichter (13) angrenzenden Bauteil eine tribologisch optimierte, den Leistungskanaleintritt (68) im Bereich der Schaltklappe (32) umschließende Dichtscheibe (42) aufweist, auf die die Schaltklappe (32) bei geschlossenen Leistungskanal (30) aufgrund der anliegenden Druckdifferenz gedrückt wird.

8. Abgasturbolader nach einem der vorherigen Ansprüche, **dadurch gekennzeichnet, dass** die Schaltklappe (32) in geöffneter Schaltstellung die Strömung nicht behindert, da die Klappe in einen dafür vorgesehenen Zwischenraum schwenkt, der außerhalb der Luftströmung angeordnet ist.

9. Abgasturbolader nach einem der vorherigen Ansprüche, **dadurch gekennzeichnet, dass** die Schaltklappe (32) entlang der Schwenkachse (III) verschiebbar gelagert ist.

10. Abgasturbolader nach einem der vorherigen Ansprüche, **dadurch gekennzeichnet, dass** die Luftführungsvorrichtung (21) eine weitere ausgangsseitig angeordnete Komponente (46) aufweist, in der ein starres Strömungsleitgitter (34) angeordnet ist, das permanent von der Luft eines Wirbelkanals (28) durchströmt ist und zu dem temporär die Luft aus einem zweiten Kanal (30) abhängig vom Betriebszustand der Brennkraftmaschine (10) zugeschaltet ist.

## Claims

1. Exhaust gas turbocharger for an internal combustion engine (10), in particular for a Diesel engine, with a compressor (13) disposed in an intake tract (14) of the internal combustion engine (10) for precompressing an air flow to be directed through the intake tract (14) to the compressor (13), **characterized in that** a switchable air guidance device (21) by means of which the air flow is directed towards the compressor (13) in at least two different ways is disposed upstream of the compressor (13), the air guidance device (21) consisting of at least two components, made of substantially synthetic material, an intake tube flap (32) with a swivel axis (III) parallel to a main flow direction swiveling substantially at right angle to the flow like a diaphragm into the power channel (30).

2. Exhaust gas turbocharger according to claim 1, **characterized in that** the components of the air guidance device (21) form the housing of the air guidance device (19) and consist of a middle section (41) and an upper section (40) with clean air flange (45) and that one of the components features a switching device (32).

3. Exhaust gas turbocharger according to one of the above claims, **characterized in that** a flow volute of a whirl channel of the air guidance device (21) upstream of the compressor (13) is generated by the housing of the air guidance device (19) or by the housing of the compressor (50) or that the flow volute (28) is divided and generated partially by the housing of the air guidance device (19) and partially by the housing of the compressor (50).

4. Exhaust gas turbocharger according to one of the above claims, **characterized in that** the air guidance device (21) is detachably coupled with the compressor housing (50) by means of a bayonet coupling or a screw coupling.

5. Exhaust gas turbocharger according to one of the above claims, **characterized in that** an intake tube flap (32) switches between two end positions and/or takes an intermediate position.

6. Exhaust gas turbocharger according to one of the above claims, **characterized in that** stops for the intake tube flap (32) are provided in the areas of the end position and/or end stops (65, 75) are provided for a switch lever (62) or a push rod (61).

7. Exhaust gas turbocharger according to one of the above claims, **characterized in that** the air guidance device (21) between the intake tube flap (32) and an adjacent component in the direction of the compressor (13) features a tribologically optimized sealing washer (42) onto which the intake tube flap (32) is pressed due to the applied pressure differential when the power channel (30) is closed and which encloses the power channel entrance (68) in the area of the intake tube flap (32).

8. Exhaust gas turbocharger according to one of the above claims, **characterized in that** the intake tube flap (32) does not impair the flow in open switch position, for the flap swivels into an intermediate space provided for this which is disposed outside of the air flow.

9. Exhaust gas turbocharger according to one of the above claims, **characterized in that** the intake tube flap (32) is movably supported along the swivel axis (III).

10. Exhaust gas turbocharger according to one of the above claims, **characterized in that** the air guidance device (21) features another component (46) disposed on the exit side in which a rigid flow guide baffle (34) is disposed that is permanently flowed through by the air of a whirl channel (28) and to which the air of a second channel (30) is temporally activated depending on the operating state of the internal combustion engine (10).

## Revendications

1. Turbocompresseur à gaz d'échappement pour un moteur à combustion interne (10), notamment pour un moteur diesel, avec un compresseur (13) placé dans un canal d'aspiration (14) du moteur à combustion interne (10), destiné à pré-comprimer un flux d'air à acheminer à travers le canal d'aspiration (14) sur le compresseur (13), **caractérisé en ce qu'**un dispositif de guidage de l'air (21) commutable au moyen duquel le compresseur (13) doit être alimenté par le flux d'air au moins de deux manières différentes est disposé en amont du compresseur (13), le dispositif de guidage de l'air (21) étant constitué d'au moins deux composants fabriqués essentiellement en matière plastique, un volet de commutation (32) avec un axe de pivotement (III) parallèle au sens de flux principal pivotant de façon essentiellement rectangulaire par rapport au flux, comme un panneau, dans le canal de puissance (30).

2. Turbocompresseur à gaz d'échappement selon la revendication 1, **caractérisé en ce que** les composants du dispositif de guidage de l'air (21) forment le boîtier du dispositif de guidage de l'air (19) et sont composés d'une partie centrale (41) et d'une partie supérieure (40) avec bride d'air pur (45), et que l'un des composants est doté d'un dispositif de commutation (32).

3. Turbocompresseur à gaz d'échappement selon l'une des revendications précédentes, **caractérisé en ce qu'**une volute d'écoulement d'un canal de tourbillonnement du dispositif de guidage de l'air (21), disposée en amont du compresseur (13), est formée par le boîtier du dispositif de guidage de l'air (19) ou par le carter du compresseur (50) ou que la volute d'écoulement (28) est divisée et est formée en partie par le boîtier du dispositif de guidage de l'air (19) et en partie par le carter du compresseur (50).

4. Turbocompresseur à gaz d'échappement selon l'une des revendications précédentes, **caractérisé en ce que** le dispositif de guidage de l'air (21) est relié de façon amovible au carter du compresseur (50) par un joint à baïonnette ou une fermeture à vis.

5. Turbocompresseur à gaz d'échappement selon l'une des revendications précédentes, **caractérisé en ce qu'**un volet de commutation (32) commute en alternance entre deux positions finales et/ou prend des positions intermédiaires.

6. Turbocompresseur à gaz d'échappement selon l'une des revendications précédentes, **caractérisé en ce que** des butées pour le volet de commutation (32) sont prévues dans les zones de la position finale et/ou que des butées finales (65, 75) sont prévues pour un levier de commutation (62) ou une bielle (61).

7. Turbocompresseur à gaz d'échappement selon l'une des revendications précédentes, **caractérisé en ce que** le dispositif de guidage de l'air (21) est doté, entre le volet de commutation (32) et un composant limitrophe en direction du compresseur (13), d'un disque d'étanchéité (42) optimisé pour les contraintes tribologiques et encerclant l'entrée d'air de puissance (68) dans la zone du volet de commutation (32), disque sur lequel le volet de commutation (32) est pressé, en raison de la différence de pression existante, lorsque le canal de puissance (30) est fermé.

8. Turbocompresseur à gaz d'échappement selon l'une des revendications précédentes, **caractérisé en ce que** le volet de commutation (32), en position de commutation ouverte, n'entrave pas le flux car le volet pivote dans un interstice prévu à cet effet qui est disposé hors du flux d'air.

9. Turbocompresseur à gaz d'échappement selon l'une des revendications précédentes, **caractérisé en ce que** le volet de commutation (32) est logé de manière mobile le long de l'axe de pivotement (III).

10. Turbocompresseur à gaz d'échappement selon l'une des revendications précédentes, **caractérisé en ce que** le dispositif de guidage de l'air (21) est doté d'un autre composant (46) disposé côté sortie dans lequel est placée une grille conductrice de flux (34) rigide qui est traversée en permanence par l'air d'un canal de tourbillonnement (28) et vers laquelle l'air provenant d'un deuxième canal (30) est temporairement acheminé en fonction de l'état d'exploitation du moteur à combustion interne.
